# EUROPEAN PATENT APPLICATION

(11) **EP 4 534 878 A1**
(43) Date of publication of application: **09.04.2025**
(21) Application number: 23815699.6
(22) Date of filing: 09.05.2023
(51) Int. Cl.: F16K 31/04, H02P 8/04

(54) **MOTOR-OPERATED VALVE CONTROL DEVICE AND MOTOR-OPERATED VALVE DEVICE**

(30) Priority: 31.05.2022 JP 2022089018
(71) Applicant: Fujikoki Corporation, Tokyo 158-0082 (JP)
(72) Inventor: NARUKAWA Bunta, Tokyo 158-0082 (JP); HAGIMOTO Hiroshi, Tokyo 158-0082 (JP)
(74) Representative: Ter Meer Steinmeister & Partner
(86) International application number: PCT/JP2023/017445
(87) International publication number: WO 2023/233939

(57) **Abstract**

[Object] To provide an electric valve control device and an electric valve device that are capable of suppressing malfunction of an electric valve at low temperatures.

[Solution] An electric valve control device (100) obtains temperature (K) based on a signal from a temperature sensor (126) disposed outside a can (20) and enters a preparation mode when the temperature (K) is lower than a reference temperature (Kr). When a magnet rotor (31) does not rotate normally in the preparation mode, the electric valve control device (100) performs a heat-generating operation to cause a stator (60) to generate heat until the magnet rotor (31) rotates normally. When the magnet rotor (31) rotates normally in the preparation mode, the electric valve control device (100) enters a standby mode.

## Description

### Technical Field

The present invention relates to an electric valve control device and an electric valve device including an electric valve and the electric valve control device.

### Background Art

Patent Literature 1 discloses an example of an electric valve according to the related art. The electric valve includes a case, a magnet rotor, and a stator. The magnet rotor is disposed inside the case. The stator is disposed outside the case. The magnet rotor and the stator are members of a stepping motor.

### Citation List

### Patent Literature

Patent Literature 1: Japanese Unexamined Patent Application Publication No. 2018-179133

### Summary of Invention

### Technical Problem

The electric valve is installed in an air conditioning system and is used to control the flow rate of refrigerant. The refrigerant also flows into the case of the electric valve and enters a gap between the case and the magnet rotor. The refrigerant contains a lubricant (refrigerating machine oil) for a compressor of the air conditioning system. When ambient temperature decreases while the electric valve is powered off, the viscosity of the lubricant increases. The high viscosity of the lubricant interferes with rotation of the magnet rotor, resulting in malfunction of the electric valve.

Accordingly, it is an object of the present invention to provide an electric valve control device and an electric valve device that are capable of suppressing malfunction of an electric valve at low temperatures.

### Solution to Problem

To achieve the object above, an electric valve control device according to one aspect of the present invention is an electric valve control device for controlling an electric valve.

The electric valve includes a valve body that has a valve chamber, a can that is bonded to the valve body, and a stepping motor.

The stepping motor includes a magnet rotor that is disposed inside the can and a stator that is disposed outside the can.

A space inside the can is connected to the valve chamber.

The electric valve control device is configured to obtain a temperature based on a signal from a temperature sensor that is disposed outside the can and to perform a heat-generating operation to cause the stator to generate heat when the temperature is lower than a reference temperature.

To achieve the object above, an electric valve control device according to another aspect of the present invention is an electric valve control device for controlling an electric valve.

The electric valve includes a valve body that has a valve chamber, a can that is bonded to the valve body, and a stepping motor.

The stepping motor includes a magnet rotor that is disposed inside the can and a stator that is disposed outside the can.

A space inside the can is connected to the valve chamber.

The electric valve control device is configured to obtain a temperature based on a signal from a temperature sensor that is disposed outside the can and to enter a standby mode in which the electric valve control device can accept a command from an external device when the temperature is higher than or equal to a reference temperature and a preparation mode when the temperature is lower than the reference temperature.

The electric valve control device is configured to perform a heat-generating operation to cause the stator to generate heat until the magnet rotor rotates normally when the magnet rotor does not rotate normally in the preparation mode.

The electric valve control device is configured to enter the standby mode when the magnet rotor rotates normally in the preparation mode.

In the present invention, preferably, the heat-generating operation includes a first operation to supply current to a coil of the stator during an energization time.

In the present invention, preferably, the heat-generating operation includes a second operation to supply current to a coil of the stator until the temperature reaches or exceeds the reference temperature.

In the present invention, preferably, the heat-generating operation includes an operation to repeat, until the temperature reaches or exceeds the reference temperature, a second operation to supply current to a coil of the stator during an energization time.

In the present invention, preferably, the heat-generating operation includes a third operation to supply a constant current to a coil of the stator.

In the present invention, preferably, the electric valve control device is configured to send information indicating that the electric valve control device enters the standby mode to the external device when the electric valve control device enters the standby mode.

Preferably, the electric valve control device is configured to send information indicating that the electric valve control device enters the preparation mode to the external device when the electric valve control device enters the preparation mode.

To achieve the object above, an electric valve device according to still another aspect of the present invention includes the electric valve and the electric valve control device.

### Advantageous Effects of Invention

According to the present invention, the electric valve control device performs the heat-generating operation to cause the stator to generate heat when the temperature detected by the temperature sensor disposed outside the can is lower than the reference temperature. The stator heats refrigerant in the space inside the can. This causes the viscosity of a lubricant contained in the refrigerant to decrease. Therefore, the magnet rotor can rotate normally, and malfunction of the electric valve can be suppressed.

According to the present invention, the electric valve control device enters the preparation mode when the temperature detected by the temperature sensor disposed outside the can is lower than the reference temperature. In the preparation mode, the electric valve control device performs the heat-generating operation to cause the stator to generate heat until the magnet rotor rotates normally when the magnet rotor does not rotate normally. The stator heats refrigerant in the space inside the can. This causes the viscosity of a lubricant contained in the refrigerant to decrease. Therefore, the magnet rotor can rotate normally, and malfunction of the electric valve can be suppressed.

### Brief Description of Drawings

[Fig. 1] Fig. 1 is a block diagram of an air conditioning system including an electric valve device according to an embodiment of the present invention.
[Fig. 2] Fig. 2 is a sectional view of the electric valve device.
[Fig. 3] Fig. 3 is a diagram illustrating a magnet rotor and a stator that are included in the electric valve device.
[Fig. 4] Fig. 4 is a diagram illustrating a microcomputer, a stepping motor, and a magnetic sensor that are included in the electric valve device.
[Fig. 5] Fig. 5 is a flowchart illustrating an example of a start-up process of an electric valve control device.
[Fig. 6] Fig. 6 is a flowchart illustrating another example of the start-up process of the electric valve control device.
[Fig. 7] Fig. 7 is a flowchart illustrating still another example of the start-up process of the electric valve control device.

### Description of Embodiments

An electric valve device according to an embodiment of the present invention is described with reference to figures.

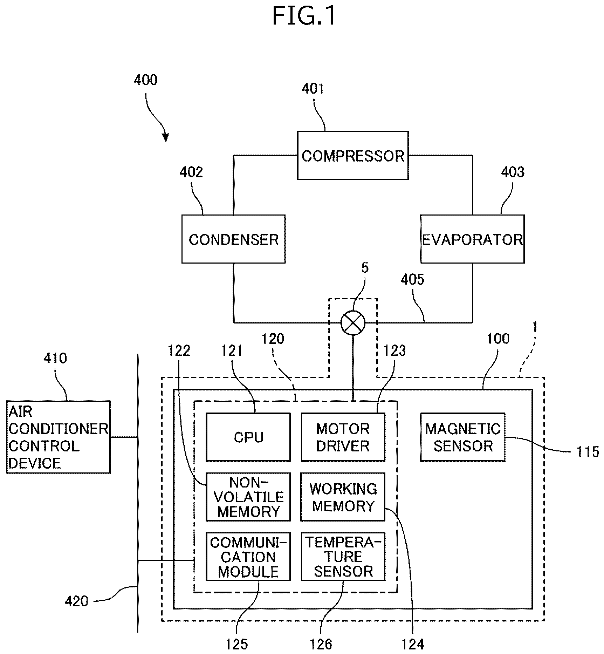

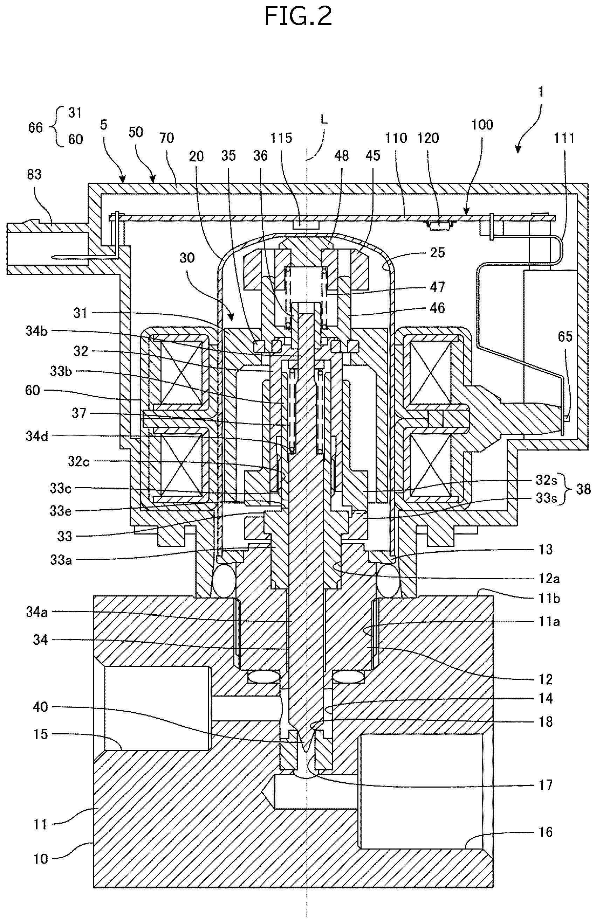

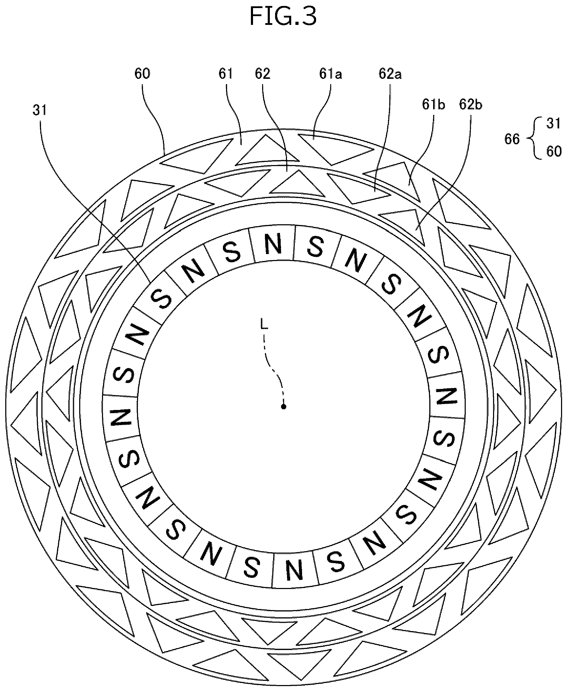

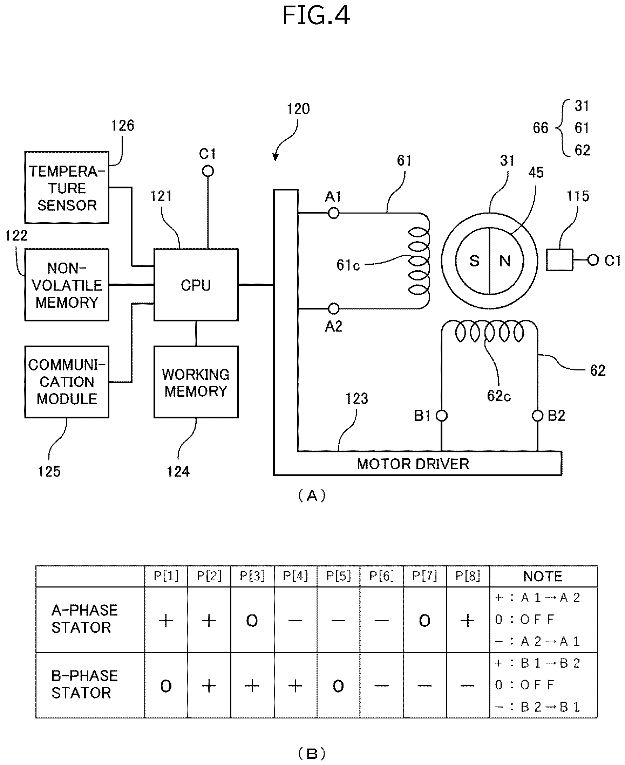

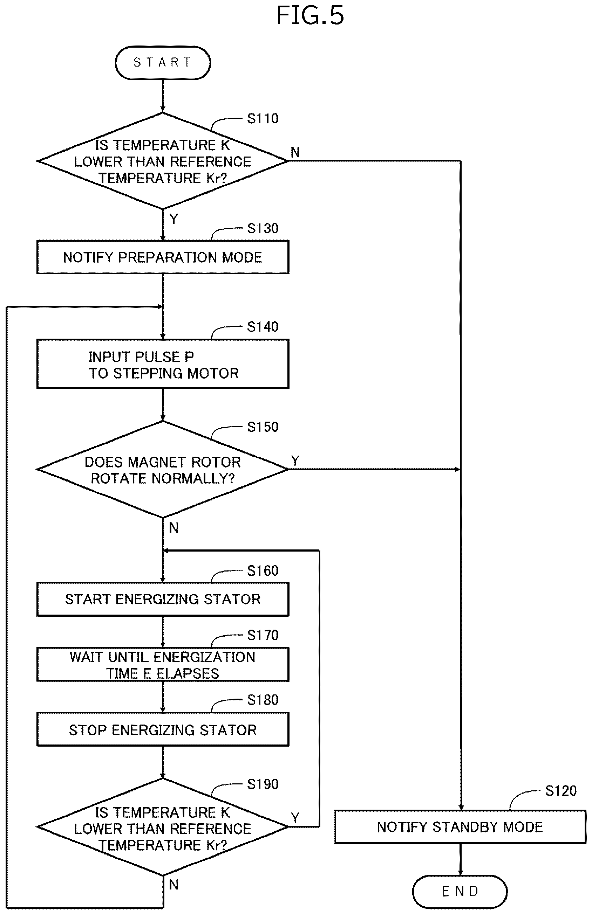

Fig. 1 is a block diagram of an air conditioning system including the electric valve device according to the embodiment of the present invention. Fig. 2 is a sectional view of the electric valve device. Fig. 3 is a diagram illustrating a magnet rotor and a stator that are included in the electric valve device. Fig. 3 schematically illustrates magnetic poles of the magnet rotor and pole teeth of the stator. The radially outward direction of the magnet rotor and the stator in Fig. 3 corresponds to an upward direction in the electric valve device. The radially inward direction of the magnet rotor and the stator in Fig. 3 corresponds to a downward direction in the electric valve device. Fig. 4 is a diagram illustrating a microcomputer, a stepping motor, and a magnetic sensor that are included in the electric valve device. Fig. 4A schematically illustrates a connection relationship between the microcomputer, the stepping motor, and the magnetic sensor. Fig. 4B illustrates an example of pulses to be input to the stepping motor. Fig. 5 is a flowchart illustrating an example of a start-up process of an electric valve control device.

An electric valve device 1 according to the embodiment includes an electric valve 5 and the electric valve control device. The electric valve control device is simply referred to as a control device 100.

For example, the electric valve device 1 is installed in an air conditioning system 400 in Fig. 1. The air conditioning system 400 includes a compressor 401, a condenser 402, the electric valve device 1 (the electric valve 5), and an evaporator 403, which are connected in this order by a pipe 405. The air conditioning system 400 includes an air conditioner control device 410. The air conditioner control device 410 is an external device. The air conditioner control device 410 is connected to the electric valve device 1 (the control device 100) via a communication bus 420 and is able to communicate with the electric valve device 1. The air conditioner control device 410 utilizes the electric valve device 1 to control the flow rate of refrigerant flowing through the pipe 405.

As illustrated in Fig. 2, the electric valve 5 includes a valve body 10, a can 20, a driving mechanism 30, a valve member 40, a permanent magnet 45, and a stator unit 50.

The valve body 10 is, for example, made of a metal, such as an aluminum alloy. The valve body 10 includes a body member 11, a supporting member 12, and a connection member 13. The body member 11 has a rectangular parallelepiped shape. The body member 11 has a mounting hole 11a. The mounting hole 11a is provided in an upper surface 11b of the body member 11. The supporting member 12 has a circular cylindrical shape. The lower part of the supporting member 12 is disposed in the mounting hole 11a. The supporting member 12 is mounted on the body member 11 by a screw structure. The upper part of the supporting member 12 projects from the upper surface 11b of the body member 11. The body member 11 has a valve chamber 14, flow channels 15 and 16, a valve port 17, and a valve seat 18. The flow channel 15 is connected to the valve chamber 14. The flow channel 16 is connected to the valve chamber 14 through the valve port 17. The valve seat 18 encloses the valve port 17 in the valve chamber 14. The connection member 13 has a circular annular plate-like shape. The inner peripheral edge of the connection member 13 is bonded to the upper part of the supporting member 12.

The can 20 is, for example, made of a metal, such as stainless steel. The can 20 has a circular cylindrical shape. The can 20 is closed at the upper end and is open at the lower end. The lower end of the can 20 is bonded to the outer peripheral edge of the connection member 13.

The driving mechanism 30 moves the valve member 40 in an up-and-down direction (a direction of an axis L). The driving mechanism 30 includes a magnet rotor 31, a valve stem holder 32, a guide bush 33, and a valve stem 34.

The magnet rotor 31 has a circular cylindrical shape. The outer diameter of the magnet rotor 31 is slightly smaller than the inner diameter of the can 20. A small gap is formed between the inner circumferential surface of the can 20 and the outer circumferential surface of the magnet rotor 31. Magnetic poles (north (N) poles and south (S) poles) are disposed on the outer circumferential surface of the magnet rotor 31. The N and S poles extend in the up-and-down direction. The N and S poles are alternately arranged at regular intervals in the circumferential direction. In the embodiment, the magnet rotor 31 has twelve N poles and twelve S poles. The interval (the angle) between the N pole and the S pole adjacent to each other is 15 degrees.

The valve stem holder 32 has a circular cylindrical shape. The valve stem holder 32 is closed at the upper end and is open at the lower end. A supporting ring 35 is secured to the upper part of the valve stem holder 32. The supporting ring 35 connects the magnet rotor 31 and the valve stem holder 32. An internal thread 32c is provided on the inner circumferential surface of the valve stem holder 32.

The guide bush 33 integrally includes a first circular cylindrical portion 33a and a second circular cylindrical portion 33b. The outer diameter of the second circular cylindrical portion 33b is smaller than that of the first circular cylindrical portion 33a. The second circular cylindrical portion 33b is coaxially connected to the upper end of the first circular cylindrical portion 33a. An external thread 33c is provided on the outer circumferential surface of the second circular cylindrical portion 33b. The external thread 33c is screwed into the internal thread 32c of the valve stem holder 32. The first circular cylindrical portion 33a is press-fitted into a fitting hole 12a provided in the supporting member 12 of the valve body 10. The guide bush 33 is coupled to the valve body 10.

A movable stopper 32s is secured to the valve stem holder 32. A fixed stopper 33s is secured to the first circular cylindrical portion 33a of the guide bush 33. When the movable stopper 32s comes into contact with the fixed stopper 33s, rotation of the valve stem holder 32 (i.e., the magnet rotor 31) in a valve closing direction is restricted. The movable stopper 32s and the fixed stopper 33s are members of a stopper mechanism 38. The stopper mechanism 38 restricts rotation of the magnet rotor 31 in the valve closing direction.

The valve stem 34 integrally includes a first part 34a and a second part 34b. The first part 34a and the second part 34b each have a circular columnar shape. The diameter of the second part 34b is smaller than that of the first part 34a. The second part 34b is coaxially connected to the upper end of the first part 34a. The second part 34b extends through the valve stem holder 32. A push nut 36 as a retainer is mounted on the second part 34b. The valve stem 34 is disposed inside the guide bush 33 and inside the supporting member 12. The lower end of the first part 34a is disposed in the valve chamber 14. The valve stem 34 has a step portion 34d. The step portion 34d is disposed in the part where the second part 34b is connected to the first part 34a. A valve closing spring 37 is disposed between the step portion 34d and the valve stem holder 32. The valve closing spring 37 is a compression coil spring. The valve closing spring 37 pushes the valve stem 34 downward.

The valve member 40 is disposed in the valve chamber 14. The valve member 40 faces the valve port 17 in the up-and-down direction. The valve member 40 opens and closes the valve port 17. The valve member 40 is connected to the lower end of the valve stem 34. For example, the valve stem 34 and the valve member 40 are integrally formed by cutting a workpiece with a circular columnar shape.

The permanent magnet 45 is disposed above the magnet rotor 31 inside the can 20. The permanent magnet 45 has a circular annular plate-like shape. The permanent magnet 45 has an N pole and an S pole. The N pole and the S pole radially face each other. The permanent magnet 45 is supported by a guide 46 mounted on the supporting ring 35. The guide 46 supports the permanent magnet 45 movably in the up-and-down direction relative to the guide 46. The rotation of the magnet rotor 31 is transmitted to the permanent magnet 45 via the guide 46. The permanent magnet 45 rotates together with the magnet rotor 31. A supporting spring 47 is disposed between the permanent magnet 45 and the guide 46. The supporting spring 47 is a compression coil spring. The supporting spring 47 pushes the permanent magnet 45 upward. A slider 48 is fitted into the permanent magnet 45. The slider 48 projects from the upper surface of the permanent magnet 45. The slider 48 is, for example, made of an engineering plastic with a relatively small coefficient of friction.

The permanent magnet 45 is pushed upward by the supporting spring 47, ensuring constant contact between the slider 48 and the inner surface of the can 20. The position of the permanent magnet 45 in the up-and-down direction is maintained even though a screw-feed action of the internal thread 32c of the valve stem holder 32 and the external thread 33c of the guide bush 33 moves the magnet rotor 31 in the up-and-down direction.

A space 25 inside the can 20 is connected to the valve chamber 14. Specifically, the space 25 is connected to the valve chamber 14 through a gap between the supporting member 12 and the valve stem 34, a gap between the guide bush 33 and the valve stem 34, and a through hole 33e of the guide bush 33. The refrigerant flowing through the valve chamber 14 enters the space 25. The refrigerant contains a lubricant (refrigerating machine oil) for the compressor 401.

The stator unit 50 includes a stator 60 and a housing 70.

The stator 60 has a circular cylindrical shape. The stator 60 includes an A-phase stator 61 and a B-phase stator 62.

The A-phase stator 61 includes a plurality of claw-pole type pole teeth 61a and 61b in the inner circumference. The tip ends of the pole teeth 61a point downward, and the tip ends of the pole teeth 61b point upward. The pole teeth 61a and 61b are alternately arranged at regular intervals in the circumferential direction. In the embodiment, the A-phase stator 61 includes twelve pole teeth 61a and twelve pole teeth 61b. The angle between the pole tooth 61a and the pole tooth 61b adjacent to each other is 15 degrees. When a coil 61c of the A-phase stator 61 is energized, the pole teeth 61a and the pole teeth 61b have opposite polarities.

The B-phase stator 62 includes a plurality of claw-pole type pole teeth 62a and 62b in the inner circumference. The tip ends of the pole teeth 62a point downward, and the tip ends of the pole teeth 62b point upward. The pole teeth 62a and 62b are alternately arranged at regular intervals in the circumferential direction. In the embodiment, the B-phase stator 62 includes twelve pole teeth 62a and twelve pole teeth 62b. The angle between the pole tooth 62a and the pole tooth 62b adjacent to each other is 15 degrees. When a coil 62c of the B-phase stator 62 is energized, the pole teeth 62a and the pole teeth 62b have opposite polarities.

The A-phase stator 61 is disposed coaxially with the B-phase stator 62. The A-phase stator 61 is in contact with the B-phase stator 62. When viewed in the direction of the axis L, the angle between the pole tooth 61a of the A-phase stator 61 and the pole tooth 62a of the B-phase stator 62 adjacent to each other is 7.5 degrees. The coil 61c of the A-phase stator 61 and the coil 62c of the B-phase stator 62 are connected to terminals 65.

The housing 70 is made of synthetic resin. The housing 70 has a rectangular parallelepiped box shape. The housing 70 houses the stator 60. The can 20 is located within both the stator 60 and the housing 70. The stator 60 and the magnet rotor 31 are members of a stepping motor 66 for driving the valve member 40. A connector 83 projecting in a lateral direction (a direction perpendicular to the axis L) is provided in the housing 70.

In the electric valve 5, the respective central axes of the body member 11 (the valve port 17 and the valve seat 18), the supporting member 12, the connection member 13, the can 20, the magnet rotor 31, the valve stem 34, the valve member 40, the permanent magnet 45, and the stator 60 (the A-phase stator 61 and the B-phase stator 62) are aligned with the axis L.

In the electric valve 5, when the magnet rotor 31 rotates in the valve closing direction, the screw-feed action of the internal thread 32c of the valve stem holder 32 and the external thread 33c of the guide bush 33 moves the magnet rotor 31 and the valve stem holder 32 downward. The valve stem holder 32 pushes the valve stem 34 downward via the valve closing spring 37. The valve stem 34 and the valve member 40 move downward, and the valve member 40 comes into contact with the valve seat 18. At this time, the magnet rotor 31 is at a valve closing position Rc. When the magnet rotor 31 at this position further rotates in the valve closing direction, the valve closing spring 37 is compressed, and the magnet rotor 31 and the valve stem holder 32 further move downward. The valve member 40 does not move downward. When the movable stopper 32s comes into contact with the fixed stopper 33s, the rotation of the magnet rotor 31 in the valve closing direction is restricted. At this time, the magnet rotor 31 is at a reference position Rx**.**

In the electric valve 5, when the magnet rotor 31 rotates in a valve opening direction, the screw-feed action of the internal thread 32c of the valve stem holder 32 and the external thread 33c of the guide bush 33 moves the magnet rotor 31 and the valve stem holder 32 upward. The valve stem holder 32 pushes the push nut 36 upward. The valve stem 34 and the valve member 40 move upward, and the valve member 40 separates from the valve seat 18. When the magnet rotor 31 further rotates in the valve opening direction, the magnet rotor 31 reaches a full-open position Rz. When the magnet rotor 31 is at the full-open position Rz, the valve member 40 is positioned farthest from the valve port 17.

The control device 100 includes a control board 110, a magnetic sensor 115, and a microcomputer 120.

The control board 110 is a printed circuit board on which electronic components are mounted. The control board 110 is housed in the housing 70. The control board 110 is disposed parallel to the lateral direction above the can 20. The terminals 65 of the stator 60 are connected to the control board 110 via wires 111. The magnetic sensor 115 and the microcomputer 120 are mounted on the control board 110.

The magnetic sensor 115 and the permanent magnet 45 are arranged in the up-and-down direction with the can 20 in between. In other words, the magnetic sensor 115 faces the permanent magnet 45 in the up-and-down direction with the can 20 in between. The magnetic sensor 115 senses a magnetic field generated by the permanent magnet 45. The magnetic sensor 115 outputs a signal (an analog signal) corresponding to the rotation angle of the magnetic field. That is, the magnetic sensor 115 is a rotation angle sensor outputting a signal corresponding to the rotation angle of the permanent magnet 45 (i.e., the magnet rotor 31). One or more Hall ICs outputting a binary signal can be used as the magnetic sensor 115.

As illustrated in Figs. 1 and 4A, the microcomputer 120 is, for example, a microcomputer for embedded device in which a central processing unit (a CPU 121), a non-volatile memory 122, a motor driver 123, a working memory 124, a communication module 125, a temperature sensor 126, and so on are integrated into one package. The microcomputer 120 controls the electric valve 5. A non-volatile memory, a working memory, a communication module, a motor driver, and a temperature sensor may be separate electronic components that are externally connected to the microcomputer 120.

The CPU 121 executes a program stored in the non-volatile memory 122 to function as various function units. The non-volatile memory 122 stores the present position of the magnet rotor 31 immediately before the CPU 121 is powered off. When the CPU 121 is powered on, the CPU 121 reads the present position of the magnet rotor 31 from the non-volatile memory 122. The working memory 124 stores variables used by the function units. The communication module 125 is connected to the air conditioner control device 410 via the communication bus 420. The temperature sensor 126 outputs a signal corresponding to an ambient temperature K of the microcomputer 120 (i.e., air temperature inside the housing 70). The motor driver 123 is connected to the stepping motor 66. Specifically, as illustrated in Fig. 4A, the motor driver 123 is connected to the coil 61c of the A-phase stator 61 and the coil 62c of the B-phase stator 62. The motor driver 123 supplies driving currents corresponding to pulses P to the coils 61c and 62c.

The magnet rotor 31 is rotated by pulses P (pulses P[1] to P[8]) input to the stepping motor 66. Specifically, the magnet rotor 31 is rotated by the driving currents, corresponding to pulses P, supplied to the stator 60 of the stepping motor 66. In this specification, "inputting pulses P to the stepping motor 66" is synonymous with "supplying driving currents corresponding to pulses P to the stator 60 of the stepping motor 66". Pulses P are repeatedly input to the stepping motor 66 in ascending or descending order. In other words, pulses P[1] to P[8] are pulses P for one cycle and are multiple pulses P repeatedly input to the stepping motor 66 in a predetermined order.

In the embodiment, the excitation mode of the stepping motor 66 is 1-2-phase excitation. The step angle of the stepping motor 66 is 3.75 degrees. When the magnet rotor 31 is at the reference position Rx, the movable stopper 32s is in contact with the fixed stopper 33s, thereby restricting the rotation of the magnet rotor 31 in the valve closing direction. The number (an initialization number) of pulses to rotate the magnet rotor 31 from the reference position Rx to the full-open position Rz is 500.

Pulses P[1] to P[8] illustrated in Fig. 4B are input to the stepping motor 66 in order. When pulses P are input to the stepping motor 66 in ascending order (in the order from P[1] to P[8]), the magnet rotor 31 rotates in the valve closing direction (clockwise in Fig. 3). When pulses P are input to the stepping motor 66 in descending order (in the order from P[8] to P[1]), the magnet rotor 31 rotates in the valve opening direction (counterclockwise in Fig. 3).

When the magnet rotor 31 rotates, the permanent magnet 45 also rotates, and the signal from the magnetic sensor 115 changes. When the magnet rotor 31 does not rotate, the permanent magnet 45 also does not rotate, and the signal from the magnetic sensor 115 does not change. Consequently, the control device 100 can determine whether the magnet rotor 31 rotates normally, based on the signal from the magnetic sensor 115. The magnet rotor 31 rotating normally means that the magnet rotor 31 rotates in response to pulses P input to the stepping motor 66.

An example of a start-up process of the control device 100 is described below with reference to the flowchart in Fig. 5.

When the control device 100 (specifically, the CPU 121) is powered on, the control device 100 reads the present position of the magnet rotor 31 from the non-volatile memory 122. The control device 100 obtains the temperature K based on the signal from the temperature sensor 126 and determines whether the temperature K is lower than a reference temperature Kr (S110).

When the temperature K is higher than or equal to the reference temperature Kr (N in S110), the control device 100 enters a standby mode and notifies the air conditioner control device 410 that the control device 100 is in the standby mode (S120). Specifically, the control device 100 sends information indicating that the control device 100 enters the standby mode to the air conditioner control device 410. The control device 100 in the standby mode can accept commands from the air conditioner control device 410. Then, the control device 100 finishes the start-up process.

When the temperature K is lower than the reference temperature Kr (Y in S110), the control device 100 enters a preparation mode and notifies the air conditioner control device 410 that the control device 100 is in the preparation mode (S130). Specifically, the control device 100 sends information indicating that the control device 100 enters the preparation mode to the air conditioner control device 410. The control device 100 in the preparation mode does not accept any commands from the air conditioner control device 410.

The control device 100 detects a direction in which the magnet rotor 31 can rotate based on the present position of the magnet rotor 31 and inputs pulses P to rotate the magnet rotor 31 in the direction to the stepping motor 66 (S140).

When the magnet rotor 31 is at the reference position Rx, the magnet rotor 31 can rotate only in the valve opening direction. When the magnet rotor 31 is at the full-open position Rz, the magnet rotor 31 can rotate only in the valve closing direction. When the magnet rotor 31 is at a position other than the reference position Rx or the full-open position Rz, the magnet rotor 31 can rotate in either the valve opening direction or the valve closing direction. When the present position of the magnet rotor 31 is nearer to the reference position Rx than is a middle position Ry between the reference position Rx and the full-open position Rz, the control device 100 inputs pulses P to rotate the magnet rotor 31 in the valve opening direction. When the present position of the magnet rotor 31 is the middle position Ry or is nearer to the full-open position Rz than is the middle position Ry, the control device 100 inputs pulses P to rotate the magnet rotor 31 in the valve closing direction. The number (a determination pulse number) of pulses P input to the stepping motor 66 by the control device 100 in Step S140 is set to a value that allows the control device 100 to determine whether the magnet rotor 31 rotates normally. In the embodiment, for example, the determination pulse number is set to two to eight. In Step S140, for example, the control device 100 may input the determination pulse number of pulses P to rotate the magnet rotor 31 in one direction (the valve opening direction or the valve closing direction) after the control device 100 inputs the determination pulse number of pulses P to rotate the magnet rotor 31 in the other direction. With this configuration, the present position of the magnet rotor 31 after pulses P are input is the same as the position before the pulses P are input.

The control device 100 obtains the rotation angle of the magnet rotor 31 based on the signal from the magnetic sensor 115 and determines whether the magnet rotor 31 rotates normally based on the rotation angle (S150).

When the magnet rotor 31 rotates normally (Y in S150), the control device 100 enters the standby mode and notifies the air conditioner control device 410 that the control device 100 is in the standby mode (S120). Then, the control device 100 finishes the start-up process.

When the magnet rotor 31 does not rotate normally (N in S150), the control device 100 starts energizing the stator 60 (S160). Specifically, the control device 100 supplies currents to the coil 61c of the A-phase stator 61 and the coil 62c of the B-phase stator 62**.** The energization of the stator 60 causes the stator 60 to generate heat.

In Step S160, each of the currents supplied to the coils 61c and 62c is a constant current. The constant current has a fixed magnitude and a fixed flow direction. In the embodiment, the currents supplied to the coils 61c and 62c are the constant currents that have the same magnitude and the same flow direction as those of the currents corresponding to one of pulses P[2], P[4], P[6], and P[8]. In the description of Step S160 below, "a current corresponding to pulse P" is synonymous with "a constant current that has the same magnitude and the same flow direction as those of a current corresponding to pulse P".

In Step S160, when the last pulse P input to the stepping motor 66 is any one of pulses P[2], P[4], P[6], and P[8] (Case 1), the control device 100 supplies the currents corresponding to the last pulse P. When the last pulse P input to the stepping motor 66 is not any of pulses P[2], P[4], P[6], and P[8] (Case 2), the control device 100 supplies the currents corresponding to pulse P adjacent to the last pulse P. For example, when the last pulse P input to the stepping motor 66 is pulse P[2], the control device 100 supplies the currents corresponding to pulse P[2] to the coils 61c and 62c. When the last pulse P input to the stepping motor 66 is pulse P[1], the control device 100 supplies the currents corresponding to pulse P[2] or P[8] to the coils 61c and 62c. In Case 2, the control device 100 updates the present position of the magnet rotor 31 to a position corresponding to the currents (pulse P) input to cause the stator 60 to generate heat. With this configuration, step-out of the stepping motor 66 can be suppressed. The magnitude of the currents supplied to the coils 61c and 62c in Step S160 may be greater than those of the currents corresponding to the pulse P. Currents other than the constant currents are also allowed to be supplied to the coils 61c and 62c in Step S160.

The control device 100 waits until an energization time E elapses (S170). The energization time E is a predetermined time and is set to 1 to 30 seconds in the embodiment. The control device 100 stops energizing the stator 60 after the energization time E elapses (S180).

The control device 100 obtains the temperature K based on the signal from the temperature sensor 126 and determines whether the temperature K is lower than the reference temperature Kr (S190).

When the temperature K is lower than the reference temperature Kr (Y in S190), the control device 100 repeats the energization of the stator 60 (S160 to S180). Steps S160 to S190 correspond to a heat-generating operation to cause the stator 60 to generate heat.

When the temperature K is higher than or equal to the reference temperature Kr (N in S190), the control device 100 returns to Step S140 and repeats Steps S140 to S190. Consequently, when the air temperature (the temperature K) inside the housing 70 is lower than the reference temperature Kr in the preparation mode, the control device 100 repeats the heat-generating operation until the magnet rotor 31 rotates normally.

The electric valve device 1 according to the embodiment includes the electric valve 5 and the control device 100. The electric valve 5 includes the valve body 10 that has the valve chamber 14, the can 20 that is bonded to the valve body 10, and the stepping motor 66. The stepping motor 66 includes the magnet rotor 31 that is disposed inside the can 20 and the stator 60 that is disposed outside the can 20. The space 25 inside the can 20 is connected to the valve chamber 14. The control device 100 is configured to obtain the temperature K based on the signal from the temperature sensor 126 that is disposed outside the can 20 and to enter the standby mode in which the control device 100 can accept commands from the air conditioner control device 410 when the temperature K is higher than or equal to the reference temperature Kr or the preparation mode when the temperature K is lower than the reference temperature Kr. The control device 100 is configured to perform the heat-generating operation to cause the stator 60 to generate heat until the magnet rotor 31 rotates normally when the magnet rotor 31 does not rotate normally in the preparation mode. The control device 100 is configured to enter the standby mode when the magnet rotor 31 rotates normally in the preparation mode.

When the temperature K detected by the temperature sensor 126 disposed outside the can 20 is lower than the reference temperature Kr, the control device 100 enters the preparation mode. When the magnet rotor 31 does not rotate normally in the preparation mode, the control device 100 performs the heat-generating operation to cause the stator 60 to generate heat until the magnet rotor 31 rotates normally. The stator 60 heats the refrigerant in the space 25 inside the can 20. This causes the viscosity of the lubricant contained in the refrigerant to decrease. Therefore, the magnet rotor 31 can rotate normally, and malfunction of the electric valve 5 can be suppressed.

The heat-generating operation includes a first operation (Steps S160 to S180) to supply the currents to the stator 60 (the coils 61c and 62c) during the energization time E. The heat-generating operation includes a second operation (Steps S160 to S190) to supply the currents to the stator 60 until the temperature K reaches or exceeds the reference temperature Kr. The heat-generating operation includes an operation (Steps S160 to S190) to repeat, until the temperature K reaches or exceeds the reference temperature Kr, a second operation to supply the currents to the stator 60 during the energization time E. The heat-generating operation includes a third operation to supply the constant currents to the stator 60. With this configuration, the control device 100 can perform the heat-generating operation with a relatively simple control.

The control device 100 is configured to send the information indicating that the control device 100 enters the standby mode to the air conditioner control device 410 when the control device 100 enters the standby mode and the information that the control device 100 enters the preparation mode to the air conditioner control device 410 when the control device 100 enters the preparation mode. With this configuration, the air conditioner control device 410 can be inhibited from sending commands to the control device 100 when there is a risk that the electric valve 5 does not operate normally.

The start-up process of the control device 100 is not limited to the process illustrated in Fig. 5.

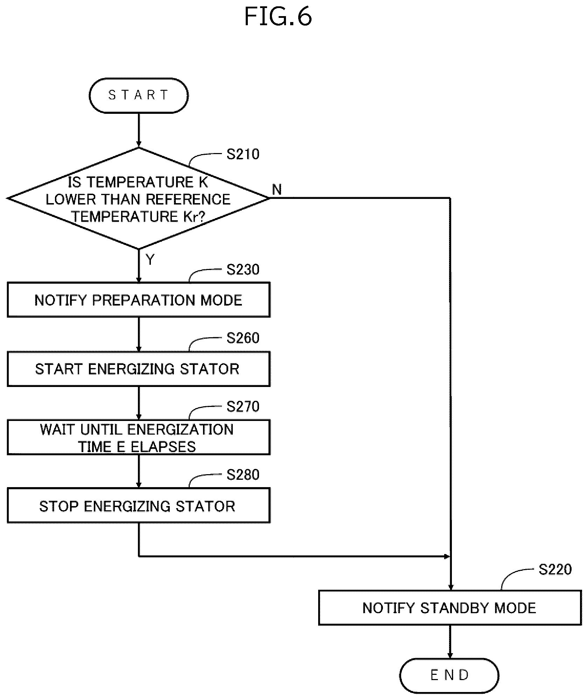

Another example of a start-up process of the control device 100 is described below with reference to the flowchart in Fig. 6.

When the control device 100 is powered on, the control device 100 reads the present position of the magnet rotor 31 from the non-volatile memory 122. The control device 100 obtains the temperature K based on the signal from the temperature sensor 126 and determines whether the temperature K is lower than the reference temperature Kr (S210).

When the temperature K is higher than or equal to the reference temperature Kr (N in S210), the control device 100 enters the standby mode and notifies the air conditioner control device 410 that the control device 100 is in the standby mode (S220). Then, the control device 100 finishes the start-up process.

When the temperature K is lower than the reference temperature Kr (Y in S210), the control device 100 enters the preparation mode and notifies the air conditioner control device 410 that the control device 100 is in the preparation mode (S230).

The control device 100 starts energizing the stator 60 (S260). Step S260 has the same process as Step S160 in Fig. 5.

The control device 100 waits until an energization time E elapses (S270). The energization time E is a predetermined time. The energization time E is set to a value that allows the refrigerant in the space 25 inside the can 20 to be heated sufficiently. For example, the energization time E is set to 30 to 180 seconds. The control device 100 stops energizing the stator 60 after the energization time E elapses (S280). Steps S260 to S280 correspond to a heat-generating operation to cause the stator 60 to generate heat.

The control device 100 enters the standby mode and notifies the air conditioner control device 410 that the control device 100 is in the standby mode (S220). Then, the control device 100 finishes the start-up process.

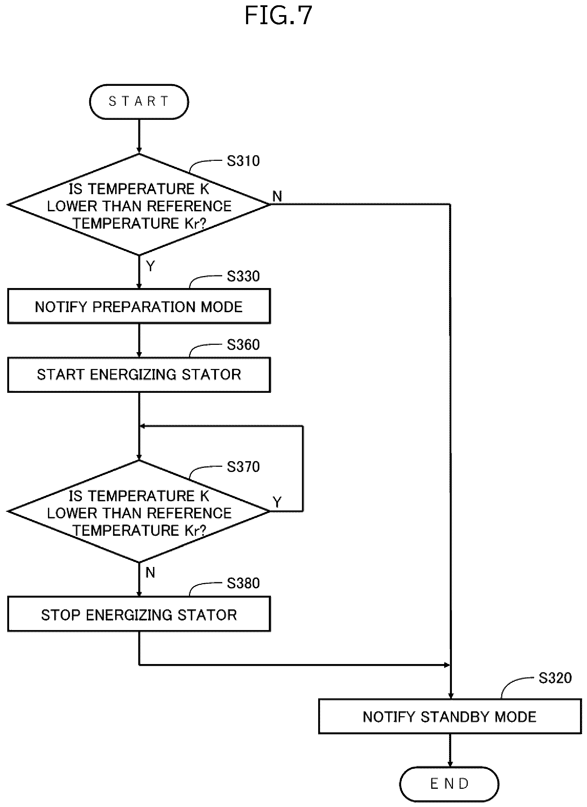

Still another example of a start-up process of the control device 100 is described below with reference to the flowchart in Fig. 7.

When the control device 100 is powered on, the control device 100 reads the present position of the magnet rotor 31 from the non-volatile memory 122. The control device 100 obtains the temperature K based on the signal from the temperature sensor 126 and determines whether the temperature K is lower than the reference temperature Kr (S310).

When the temperature K is higher than or equal to the reference temperature Kr (N in S310), the control device 100 enters the standby mode and notifies the air conditioner control device 410 that the control device 100 is in the standby mode (S320). Then, the control device 100 finishes the start-up process.

When the temperature K is lower than the reference temperature Kr (Y in S310), the control device 100 enters the preparation mode and notifies the air conditioner control device 410 that the control device 100 is in the preparation mode (S330).

The control device 100 starts energizing the stator 60 (S360). Step S360 has the same process as Step S160 in Fig. 5.

The control device 100 obtains the temperature K based on the signal from the temperature sensor 126 and determines whether the temperature K is lower than the reference temperature Kr (S370).

When the temperature K is lower than the reference temperature Kr (Y in S370), the control device 100 continues energizing the stator 60.

When the temperature K is higher than or equal to the reference temperature Kr (N in S370), the control device 100 stops energizing the stator 60 (S380). Steps S360 to S380 correspond to a heat-generating operation to cause the stator 60 to generate heat.

The control device 100 enters the standby mode and notifies the air conditioner control device 410 that the control device 100 is in the standby mode (S320). Then, the control device 100 finishes the start-up process.

As illustrated in Figs. 6 and 7, the control device 100 is configured to perform the heat-generating operation to cause the stator 60 to generate heat when the temperature K detected by the temperature sensor 126 disposed outside the can 20 is lower than the reference temperature Kr. The control device 100 can perform the heat-generating operation with a very simple control. This causes the viscosity of the lubricant contained in the refrigerant to decrease. Therefore, the magnet rotor 31 can rotate normally, and malfunction of the electric valve 5 can be suppressed.

In the embodiment, the control device 100 controls the electric valve 5. Alternatively, the air conditioner control device 410 may directly control the electric valve 5. In this configuration, the air conditioner control device 410 serves as an electric valve control device.

In the embodiment, the control device 100 is configured to obtain the temperature K based on the signal from the temperature sensor 126. Alternatively, the air conditioner control device 410 may be configured to obtain the temperature K based on a signal from a separate temperature sensor that is disposed outside the can 20 and to notify the control device 100 of the temperature K.

In this specification, the terms indicating shapes of members, such as "circular cylindrical" and "circular columnar", are also used for members substantially having the shapes indicated by the terms. For example, "circular cylindrical member" includes a circular cylindrical member and a substantially circular cylindrical member.

The embodiment of the present invention is described above. The present invention, however, is not limited to the embodiment. Embodiments obtained by a person skilled in the art appropriately adding, removing, or modifying components according to the embodiment described above, and an embodiment obtained by appropriately combining features of the embodiment are included in the scope of the present invention without departing from the spirit of the present invention.

### Reference Signs List

1 ... electric valve device, 5 ... electric valve, 10 ... valve body, 11 ... body member, 11a ... mounting hole, 11b ... upper surface, 12 ... supporting member, 12a ... fitting hole, 13 ... connection member, 14 ... valve chamber, 15 ... flow channel, 16 ... flow channel, 17 ... valve port, 18 ... valve seat, 20 ... can, 25 ... space, 30 ... driving mechanism, 31 ... magnet rotor, 32 ... valve stem holder, 32c ... internal thread, 32s ... movable stopper, 33 ... guide bush, 33a ... first circular cylindrical portion, 33b ... second circular cylindrical portion, 33c ... external thread, 33e ... through hole, 33s ... fixed stopper, 34 ... valve stem, 34a ... first part, 34b ... second part, 34d ... step portion, 35 ... supporting ring, 36 ... push nut, 37 ... valve closing spring, 38 ... stopper mechanism, 40 ... valve member, 45 ... permanent magnet, 46 ... guide, 47 ... supporting spring, 48 ... slider, 50 ... stator unit, 60 ... stator, 61 ... A-phase stator, 61a ... pole tooth, 61b ... pole tooth, 61c ... coil, 62 ... B-phase stator, 62a ... pole tooth, 62b ... pole tooth, 62c ... coil, 65 ... terminal, 66 ... stepping motor, 70 ... housing, 83 ... connector, 100 ... electric valve control device, 110 ... control board, 111 ... wire, 115 ... magnetic sensor, 120 ... microcomputer, 121 ... CPU, 122 ... non-volatile memory, 123 ... motor driver, 124 ... working memory, 125 ... communication module, 126 ... temperature sensor, 400 ... air conditioning system, 401 ... compressor, 402 ... condenser, 403 ... evaporator, 405 ... pipe, 410 ... air conditioner control device, 420 ... communication bus, E ... energization time, K ... temperature, Kr ... reference temperature, L ... axis, P ... pulse, Rc ... valve closing position, Rx ... reference position, Ry ... middle position, Rz ... full-open position

## Claims

1. An electric valve control device for controlling an electric valve,
wherein the electric valve includes a valve body that has a valve chamber, a can that is bonded to the valve body, and a stepping motor,
wherein the stepping motor includes a magnet rotor that is disposed inside the can and a stator that is disposed outside the can,
wherein a space inside the can is connected to the valve chamber, and
wherein the electric valve control device is configured to obtain a temperature based on a signal from a temperature sensor that is disposed outside the can and to perform a heat-generating operation to cause the stator to generate heat when the temperature is lower than a reference temperature.

2. An electric valve control device for controlling an electric valve,
wherein the electric valve includes a valve body that has a valve chamber, a can that is bonded to the valve body, and a stepping motor,
wherein the stepping motor includes a magnet rotor that is disposed inside the can and a stator that is disposed outside the can,
wherein a space inside the can is connected to the valve chamber,
wherein the electric valve control device is configured to obtain a temperature based on a signal from a temperature sensor that is disposed outside the can and to enter a standby mode in which the electric valve control device accepts a command from an external device when the temperature is higher than or equal to a reference temperature and a preparation mode when the temperature is lower than the reference temperature,
wherein the electric valve control device is configured to perform a heat-generating operation to cause the stator to generate heat until the magnet rotor rotates normally when the magnet rotor does not rotate normally in the preparation mode, and
wherein the electric valve control device is configured to enter the standby mode when the magnet rotor rotates normally in the preparation mode.

3. The electric valve control device according to Claim 1 or 2, wherein the heat-generating operation includes a first operation to supply current to a coil of the stator during an energization time.

4. The electric valve control device according to Claim 1 or 2, wherein the heat-generating operation includes a second operation to supply current to a coil of the stator until the temperature reaches or exceeds the reference temperature.

5. The electric valve control device according to Claim 1 or 2, wherein the heat-generating operation includes an operation to repeat, until the temperature reaches or exceeds the reference temperature, a second operation to supply current to a coil of the stator during an energization time.

6. The electric valve control device according to Claim 1 or 2, wherein the heat-generating operation includes a third operation to supply a constant current to a coil of the stator.

7. The electric valve control device according to Claim 2,
wherein the electric valve control device is configured to send information indicating that the electric valve control device enters the standby mode to the external device when the electric valve control device enters the standby mode, and
wherein the electric valve control device is configured to send information indicating that the electric valve control device enters the preparation mode to the external device when the electric valve control device enters the preparation mode.

8. An electric valve device comprising: the electric valve; and the electric valve control device according to Claim 1 or 2.
